# EUROPÄISCHE PATENTANMELDUNG

(11) **EP 3 957 869 A1**
(43) Veröffentlichungstag der Anmeldung: **23.02.2022**
(21) Anmeldenummer: 20191535.2
(22) Anmeldetag: 18.08.2020
(51) Int. Cl.: F16B 5/02, F16B 41/00

(54) **VERFAHREN UND ANORDNUNG ZUM ÜBERPRÜFEN VON SCHRAUBVERBINDUNGEN**

(71) Anmelder: Siemens Aktiengesellschaft, 80333 München (DE)
(72) Erfinder: Hallak, Jalal, 1220 Wien (AT); Reschenauer, Stefan, 2191 Atzelsdorf (AT); Hayek, Robert, 1140 Wien (AT)
(74) Vertreter: Maier, Daniel Oliver

(57) **Zusammenfassung**

Die Erfindung betrifft ein Verfahren wie eine Anordnung zum Überprüfen von Schraubverbindungen in einem elektrischen Gerät, insbesondere in einer Stromversorgung bzw. einem Schaltnetzteil. Dabei wird durch zumindest eine Schraubverbindung mit Hilfe eines leitenden Kontaktelements (KE) im elektrischen Gerät eine elektrisch leitende Verbindung z.B. für Leistungs- und/oder Signalübertragung zwischen einer Trägerplatte (LP1) und einer weiteren Trägerplatte (LP2) des elektrischen Geräts hergestellt. Dabei wird ein Schraubelement (SE) in einem nicht metallisierten Durchgangsloch (DL) in der Trägerplatte (LP1) derart angebracht wird (101), dass das Kontaktelement (KE) für die elektrisch leitende Verbindung zwischen der Trägerplatte (LP1) mit der weiteren Trägerplatte (LP2) an eine Kontaktfläche (KF1) auf einer ersten Seite (S1) der Trägerplatte (LP2) angepresst wird und dass ein Kopfteil (KO) des Schraubelements (SE) an eine leitende Kontaktfläche (KF2) auf einer zweiten Seite (S2) der Trägerplatte (LP1) angepresst wird. Die leitenden Kontaktfläche (KF2) auf der zweiten Seite (S2) der Trägerplatte (LP2) und der Kopfteil (KO) des Schraubelements (SE) bilden dabei einen Sensor bzw. eine Sensorfläche, von welcher ein Signal abgegriffen wird (102). Das auf der Sensorfläche bzw. auf der Kontaktfläche (KF2) auf der zweiten Seite (S2) der Trägerplatte (LP2) abgegriffene Signal wird ausgewertet (103), wobei aus dem Signal ein Montagezustand des Schraubelements (SE) abgeleitet wird. Dadurch können auf einfach Weise fehlende oder nicht ordnungsgemäß montierte Schraubelemente (SE) erkannt werden.

## Beschreibung

### Technisches Gebiet

Die vorliegende Erfindung betrifft allgemein das Gebiet elektrischer und elektronischer Geräte, insbesondere den Bereich der Schaltnetzteile sowie der leistungselektronischen Schaltungen. Im Speziellen bezieht sich die vorliegende Erfindung auf ein Verfahren zum Überprüfen von Schraubverbindungen in einem elektrischen Gerät, insbesondere in einer Stromversorgung bzw. einem Schaltnetzteil. Dabei wird durch zumindest eine Schraubverbindung mit Hilfe eines leitenden Kontaktelements im elektrischen Gerät eine elektrisch leitende Verbindung z.B. für Leistungs- und/oder Signalübertragung zwischen einer Trägerplatte und einer weiteren Trägerplatte des elektrischen Geräts hergestellt. Weiterhin bezieht sich die vorliegende Erfindung auf eine Anordnung zur Durchführung des erfindungsgemäßen Verfahrens.

### Stand der Technik

Geräte, insbesondere elektrische oder elektronische Geräte wie z.B. Schaltnetzteile, leistungselektronische Schaltungen, Steuergeräte, etc. werden heutzutage üblicherweise aus elektrischen Bauelementen und/oder Bauelementgruppen aufgebaut. Die Bauelemente sind dabei auf einer Trägerplatte - einer so genannte Leiterplatte - anbracht. Die Träger- oder Leiterplatte dient einer mechanischen Befestigung sowie einer elektrischen Verbindung der Bauelemente. Üblicherweise bestehen Leiterplatten aus isolierendem Material mit daran haftenden leitenden Verbindungen und Kontaktflächen, welche z.B. einseitig oder auf beiden Seiten der Leiterplatte aufgebracht sein können.

Üblicherweise sind elektrische Gerät, wie z.B. Stromversorgungen bzw. Schaltnetzteil aus mehreren, mit elektrischen Bauelementen und/oder Bauelementgruppen bestückten Trägerplatten aufgebaut. In der Fertigung können die bestückten Trägerplatten z.B. vor einer Montage des elektrischen Geräts in einem Gehäuse oder Schaltschrank mittels Schraubelementen verbunden werden. Dabei kann auch vorgesehen sein, dass über eine mechanisch lösbare Verbindung, wie einer Schraubverbindung, einer Trägerplatte mit einer weiteren Trägerplatte eine Übertragung von elektrischem Strom bzw. eine Leistungsübertragung und/oder eine Signalübertragung stattfindet. Aus Sicherheitsgründe darf eine elektrisch leitende Verbindung zwischen Trägerplatten, welche durch eine Schraubverbindung mechanisch lösbar verbunden sind, nicht über ein Schraubelement, insbesondere nicht über ein an einem Schaft des Schraubelements angebrachtes Gewinde durchgeführt werden. Daher werden die Trägerplatten beispielsweise über Kontaktelemente elektrisch leitend verbunden.

Dazu wird z.B. ein Kontaktelement mittels einer Schraubverbindung an eine an einer ersten Seite der Trägerplatte angebrachte, elektrisch leitende Kontaktfläche angepresst. Für die Schraubverbindungen werden meist in Trägerplatte vorhandene Durchkontaktierungen verbaut, wobei z.B. ein elektrisches Signal oder elektrischer Strom über die Durchkontaktierung zu einer leitenden Kontaktfläche auf der zweiten Seite der Trägerplatte geleitet werden kann. Für die elektrisch leitende Verbindung zu einer weiteren Trägerplatte kann das entsprechend ausgestaltete Kontaktelement mit einer leitenden Kontaktfläche oder mit Leiterbahnen der weiteren Trägerplatte lösbar oder nicht lösbar (z.B. mittels Ankleben, Löten, etc.) verbunden sein und so die elektrische Verbindung zu weiteren Geräteteile herstellen.

Während des Fertigungsprozesses - vor allem beim Verbinden der Geräteteile bzw. beim Zusammenfügen der bestückten Trägerplatten - kann es vorkommen, dass einzelne Schraubelemente zum Anpressen der Kontaktelemente vergessen, mangelhaft fixiert oder fehlerhaft angebracht werden. Trotz fehlender einzelner Schraubelemente oder mangelhafter Fixierung kann das Kontaktelement an der leitenden Kontaktfläche der Trägerplatte anliegen. Auf diese Weise kann z.B. ein unsicherer, elektrischer Kontakt zwischen den Trägerplatten entstehen. Aufgrund der Nutzung von Durchkontaktierungen für die jeweiligen Schraubverbindungen werden Strom und/oder Signale trotz des unsicheren, elektrischen Kontakts bzw. eines nicht ordnungsgemäß montierten Schraubelements weiterhin von ersten auf die zweite Seite der Trägerplatte übertragen. Allerdings können Funktion und Sicherheit des elektrischen Geräts beeinträchtigt sein. Da insbesondere bei elektrischen Geräten, wie z.B. bei Schaltnetzteilen, auch größere Ströme zwischen Trägerplatten übertragen werden, kann ein unsicherer, elektrischer Kontakt beispielsweise zu verstärkter Wärmeentwicklung und/oder Funkenbildung und damit zu Schäden an den auf einer der Trägerplatten bestückten Bauelementgruppen bis zum Abbrand einzelner Bauelementgruppe führen.

Üblicherweise werden während des Fertigungsprozesses von elektrischen Geräten die Schraubverbindungen, durch welche mittels eines Kontaktelements neben mechanisch lösbaren Verbindungen auch elektrisch leitende Verbindungen zwischen bestückten Träger- bzw. Leiterplatten hergestellt werden, manuell - beispielsweise nach dem so genannten Vier-Augen-Prinzip - überprüft. Das Vier-Augen-Prinzip erfordert allerdings mehr Personal und Zeit und ist meist mit höheren Kosten verbunden, da üblicherweise eine zusätzliche, mit Kontrollaufgaben betraute Arbeitskraft vorhanden sein muss.

Alternativ kann eine Überprüfung der Schraubverbindungen auch mittels automatischer, optischer Inspektion (oder englisch automated optical inspection, kurz AOI) erfolgen. Dabei werden z.B. mittels eines Bildverarbeitungsverfahren Fehler in der Produktion oder Fertigung gefunden und gemeldet. AOI-System werden z.B. in der Leiterplattenentwicklung zur Bestück- und Lötstellenkontrolle eingesetzt. Eine Kontrolle der Schraubverbindung mittels AOI weist aber den Nachteil auf, dass dazu ein weiterer Prozessschritt in der Fertigung vorsehen werden muss und dass eine Erfassung von z.B. in einem Winkel von 90° verbundenen Trägerplatten mittels Bildverarbeitungsverfahren meist aufwendig ist. Weiterhin können mittels AOI zwar fehlende Schraubelemente erkannt werden, aber eine mangelhafte oder fehlerhafte Fixierung von Schraubelementen ist meist nur schwer erkennbar bzw. feststellbar.

### Darstellung der Erfindung

Der Erfindung liegt daher die Aufgabe zugrunde, ein Verfahren zum Überprüfen einer Schraubverbindung für einen mechanische und elektrisch leitende Verbindung einer Trägerplatte mit einer weiteren Trägerplatte in einem elektrischen Gerät sowie eine zugehörige Anordnung anzugeben, welche während einer Fertigung und/oder Inbetriebnahme des elektrischen Geräts auf einfache Weise für Überprüfungszwecke zeit- und/oder kosteneffizient eingesetzt werden können.

Diese Aufgabe wird durch ein Verfahren und eine zugehörige Anordnung der eingangs beschriebenen Art mit den Merkmalen der unabhängigen Ansprüche gelöst. Vorteilhafte Ausführungsformen der vorliegenden Erfindung sind in den abhängigen Ansprüchen beschrieben.

Erfindungsgemäß erfolgt die Lösung der Aufgabe durch ein Verfahren der eingangs beschriebenen Art für eine Überprüfung von Schraubverbindungen in einem elektrischen Geräts insbesondere eines Schaltnetzteils oder einer leistungselektronischen Schaltung, wobei durch die jeweilige Schraubverbindung mittels eines elektrisch leitenden Kontaktelements neben einer mechanisch lösbaren Verbindung auch ein elektrisch leitende Verbindung zur Leistungs-, Strom- und/oder Signalübertragung zwischen einer Trägerplatte des elektrischen Geräts und einer weiteren Trägerplatte des elektrischen Geräts hergestellt wird. Dabei wird für die jeweilige Schraubverbindung ein Schraubelement derart in einem nicht metallisierten Durchgangsloch in der Trägerplatte derart angebracht, dass das Kontaktelement für die elektrisch leitende Verbindung zwischen der Trägerplatte mit der weiteren Trägerplatte an eine Kontaktfläche auf einer ersten Seite der Trägerplatte angepresst wird und dass ein Kopfteil des Schraubelements an eine leitende Kontaktfläche auf einer zweiten Seite der Trägerplatte angepresst wird. An der leitenden Kontaktfläche auf der zweiten Seite der Trägerplatte wird dann ein Signal abgegriffen. Das abgegriffene Signal wird ausgewertet, wobei aus dem Signal ein Montagezustand des Schraubelements abgeleitet werden kann.

Der Hauptaspekt des erfindungsgemäßen Verfahrens besteht darin, dass durch die Anbringung des Schraubelements in einem nicht metallisierten Durchgangsloch eine Signalübertragung vom Kontaktelement, welches an der ersten Seite der Trägerplatte fixiert ist, zur leitenden Kontaktfläche auf der zweiten Seite der Trägerplatte hergestellt wird. Dabei können der Kopfteil des Schraubelements und die leitende Kontaktfläche auf der zweiten Seite der Trägerplatte als Sensor bzw. Sensorfläche verwendet werden, welche ein Signal zur Verfügung stellt. Aus diesem Signal kann z.B. eine Funktionsfähigkeit der elektrisch leitenden Verbindung zur weiteren Trägerplatte und damit über den jeweiligen Montagezustand des Schraubelements abgeleitet werden. Ist beispielsweise kein Schraubelement angebracht, so kann kein Signal an der Kontaktfläche auf der zweiten Seite der Trägerplatte abgegriffen. Auch mangelhaft fixierte Schraubelemente sind anhand des Signals auf einfache und kostensparende Weise erkennbar. Durch das erfindungsgemäße Verfahrens sind damit Montagefehler bei Schraubverbindungen, welche auch zur elektrisch leitenden Verbindung dienen, sehr einfach, kostensparend und rasch entdeckbar und behebbar. Schädigungen des elektrischen Geräts und Sicherheitsrisken können damit auf einfache Weise verhindert werden.

Weiterhin ist es von Vorteil, wenn das an der leitenden Kontaktfläche auf der zweiten Seite der Trägerplatte abgegriffene Signal an eine Auswerteeinrichtung weitergeleitet wird.

Durch die Auswerteeinrichtung kann das Signal entsprechend ausgewertet werden und bei einer nicht ordnungsgemäßen Anbringung des Schraubelements z.B. eine Fehlermeldung ausgegeben werden.

Idealerweise wird als Auswerteeinrichtung eine Reglereinheit und/oder eine Messeinheit (z.B. Eingangsspannungsmessung, Ausgangsspannungsmessung, etc.) verwendet, welche bereits im elektrischen Gerät vorhanden sind. Auf diese Weise können bereits im Gerät vorhandene Einheit genutzt und zusätzliche Kosten gespart werden.

Weiterhin ist es günstig, wenn als Signal an der leitenden Kontaktfläche auf der zweiten Seite der Trägerplatte ein Spannungspotential abgegriffen wird. Ein derartige Signal kann beispielsweise ohne zusätzlichen Aufwand von im elektrischen Gerät vorhandenen Einheiten (z.B. Regler, Messeinheit, etc.) detektiert und ausgewertet werden.

Zweckmäßigerweise wird das Signal während eines Probebetriebs und/oder bei einer Inbetriebnahme des elektrischen Geräts erfasst und ausgewertet. Damit wird auf einfache Weise verhindert, dass ein nicht ordnungsgemäß montiertes Gerät ausgeliefert oder in Betrieb genommen wird. Weiterhin kann z.B. zu Wartungszwecken das Signal auch während eines laufenden Betriebs des elektrischen Geräts abgegriffen und ausgewertet werden.

Die Lösung der Aufgabe erfolgt weiterhin durch eine Anordnung zum Überprüfen zumindest einer Schraubverbindung eines auf Trägerplatten angeordneten, elektrischen Geräts, insbesondere einer Stromversorgung bzw. eines Schaltnetzteils. Dabei weist die Anordnung zumindest auf:
- eine Trägerplatte, welche zumindest ein nicht metallisiertes Durchgangsloch und zumindest im Bereich des Durchgangslochs auf einer ersten Seite und auf einer zweite Seite leitende Kontaktflächen aufweist;
- ein leitendes Kontaktelement, welches neben einer mechanischen Verbindung eine elektrisch leitende Verbindung zwischen der Trägerplatte und einer weiteren Trägerplatte herstellt;
- ein Schraubelement, welches derart im nicht metallisierten Durchgangsloch angeordnet ist, dass das Kontaktelement für die elektrisch leitende Verbindung zur weiteren Trägerplatte an eine Kontaktfläche auf einer ersten Seite der Trägerplatte angepresst wird und dass ein Kopfteil des Schraubelements an eine leitende Kontaktfläche auf einer zweiten Seite der Trägerplatte angepresst wird, wobei von der leitenden Kontaktfläche auf der zweiten Seite der Trägerplatte ein Signal abgreifbar ist, aus welchem ein Montagezustand des Schraubelements abgeleitet werden kann.

Durch die Anordnung kann auf einfache, rasche Weise und kosteneffizient eine mangelhafte Montage eines Schraubelements bei einer Schraubverbindung erkannt werden, welche in einem elektrischen Gerät neben einer mechanischen Verbindung auch zur elektrisch leitenden Verbindung zwischen Trägerplatten des Geräts dient. Weiterhin wird durch die Anordnung sichergestellt, dass das elektrische Gerät bei einem fehlenden Schraubelement trotz eines zufälligen Kontakts zwischen dem Kontaktelement und der leitenden Kontaktfläche auf der ersten Seite der Trägerplatte nicht hochfährt. Auf diese Weise werden z.B. fehlende Schraubelemente rasch entdeckt und Schäden am Gerät verhindert.

Weiterhin ist es günstig, wenn eine Auswerteeinheit zum Auswerten des an der leitenden Kontaktfläche auf der zweiten Seite der Trägerplatte abgegriffenen Signals vorgesehen ist, um mangelhaft ausgeführte Schraubverbindungen (z.B. fehlendes Schraubelement, nicht richtig fixiertes Schraubelement, etc.) rasch zu detektieren und zu erkennen. Als Auswerteeinheit können beispielsweise im elektrischen Gerät bereits vorhandene Reglereinheiten, Messeinheiten, etc. genutzt werden, um z.B. zusätzliche Kosten zu sparen.

Es ist weiterhin von Vorteil, wenn das Kontaktelement und das Schraubelement aus leitendem Material (z.B. verzinktem Kupfer, etc.) hergestellt sind. Auf diese Weise wird eine Signalübertragung zwischen der weiteren Trägerplatte und der Kontaktfläche auf der ersten Seite der Trägerplatte über das Kontaktelement und zwischen dem Kontaktelement und der Kontaktfläche auf der zweiten Seite der Trägerplatte über das Schraubelement sichergestellt. Anhand des Signals kann dann einerseits die Funktionsfähigkeit der elektrisch leitenden Verbindung zwischen der Trägerplatte und der weiteren Trägerplatte sowie die korrekte Montage des Schraubelements festgestellt werden.

Weiterhin ist es günstig, wenn das Kontaktelement ein U-förmiges Profil oder eine Bügelform aufweist. Durch ein u-förmig bzw. bügelförmig ausgeführtes Kontaktelement können beispielsweise übereinander oder in einem 90°-Winkel zueinander angeordneten Trägerplatten sehr einfach mechanisch und elektrisch leitend verbunden werden. Dazu kann z.B. ein Schenkel des u-förmig bzw. bügelförmig ausgeführten Kontaktelements mit auf jener weiteren Trägerplatte lösbar oder nicht lösbar angebracht werden, mit welcher die Trägerplatte verbunden werden soll. Durch eine Bohrung in einem Mittelsteg des u-förmig bzw. bügelförmig ausgeführten Kontaktelements kann dann sehr einfach die Schraubverbindung hergestellt werden.

### Kurzbeschreibung der Zeichnung

Die Erfindung wird nachfolgend in beispielhafter Weise anhand der beigefügten Figuren erläutert. Dabei zeigen:
- Figur 1: beispielhaft und schematisch eine erfindungsgemäße Anordnung zum Überprüfen einer Schraubverbindung in einer Schnittansicht im Bereich eines Durchgangslochs in der Trägerplatte
- Figur 2: schematisch einen beispielshaften Ablauf des erfindungsgemäßen Verfahrens zum Überprüfen einer Schraubverbindung in einem elektrischen Gerät

### Ausführung der Erfindung

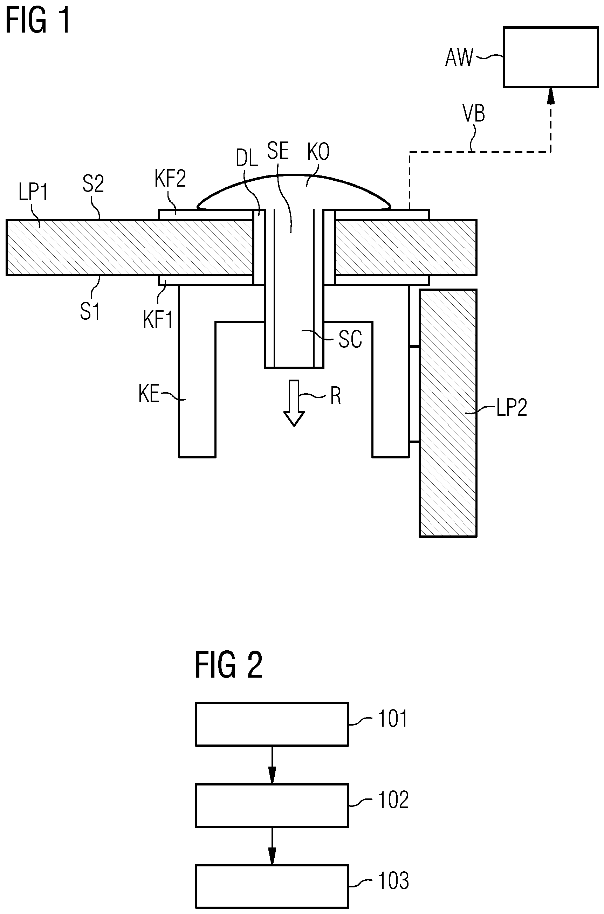

Figur 1 zeigt in schematischer und beispielhafter Weise eine erfindungsgemäße Anordnung zum Überprüfen einer Schraubverbindung in einem elektrischen Gerät. Dabei wird zur besseren Veranschaulichung die Anordnung in Figur 1 beispielhaft in einer Schnittansicht im Bereich eines Durchgangslochs DL in einer Trägerplatte LP1 bzw. Leiterplatte LP1 dargestellt, auf welcher Bauelementgruppen für das elektrische Gerät (z.B. Schaltnetzteil, ein- oder mehrstufige Stromversorgung, etc.) angebracht sind. Die Trägerplatte LP1 weist sowohl auf einer ersten Seite S1 als auch auf einer zweiten Seite S2 im Bereich das Durchgangslochs DL leitende Kontaktflächen KF1, KF2 (z.B. Kupferbeschichtung) auf. Das Durchgangsloch DL ist nicht metallisiert aufgeführt. D.h., es besteht keine Durchkontaktierung bzw. elektrisch leitende Verbindung zwischen den Kontaktflächen KF1, KF2 auf der ersten und der zweiten Seite Sl, S2 der Trägerplatte LP1 durch eine metallischen Beschichtung (z.B. Kupfer, etc.).

Für eine elektrisch leitende Verbindung zu einer weiteren Trägerplatte LP2 des elektrischen Geräts weist die Anordnung ein leitendes Kontaktelement KE auf. Das Kontaktelement KE kann entsprechend einer jeweiligen Anordnung der weiteren Trägerplatte LP2 ausgeformt sein. Die weitere Trägerplatte LP2 kann je nach Gehäuse oder Montage des elektrischen Geräts z.B. neben, über oder in einem 90°-Winkel zur Trägerplatte LP1 angeordnet sein. Wird die weitere Trägerplatte LP2 - wie in Figur 1 beispielhaft dargestellt - in einem 90°-Winkel zur Trägerplatte LP1 angebracht, so kann das Kontaktelemente KE z.B. ein U-förmiges Profil bzw. eine Bügelform aufweisen. Um eine elektrisch leitende Verbindung z.B. für eine Leistungs- und/oder Signalübertragung zwischen der Trägerplatte LP1 und der weiteren Trägerplatte LP2 herzustellen, wird das Kontaktelemente KE an die Kontaktfläche KF1 auf der ersten Seite S1 der Trägerplatte LP1 mittels einer Schraubverbindung angepresst. Die Verbindung des Kontaktelements KE zur weiteren Trägerplatte LP2 kann z.B. lösbar (z.B. Schraubverbindung, Steckverbindung, etc.) oder nicht lösbar (z.B. mittels Ankleben, Löten, etc.) ausgeführt sein. Das Kontaktelement KE ist aus einem elektrisch leitenden Material - z.B. verzinktem Kupfer, etc. - ausgeführt.

Für die Schraubverbindung des Kontaktelements KE mit der Trägerplatte LP1 weist die Anordnung ein Schraubelement SE mit einem Kopfteil KO und einem Schaftteil SC auf, welches ebenfalls aus leitendem Material (z.B. verzinktes Kupfer, etc.) hergestellt ist. Am Schaftteil SC des Schraubelements SE ist ein Gewinde angebracht, durch welches das Kontaktelement KE an der Trägerplatte LP1 fixierbar bzw. an die Kontaktfläche KF1 auf der ersten Seite S1 der Trägerplatte LP1 anpressbar ist. Das Kontaktelement KE weist dazu z.B. in einem Mittelsteg eine Bohrung mit Gewinde auf.

Zum Fixieren bzw. zum Anpressen des Kontaktelements KE an die Kontaktfläche KF1 auf der ersten Seite S1 der Trägerplatte LP1 ist das Schraubelement SE im nicht metallisierten Durchgangsloch DL der Trägerplatte LP1 derart angebracht, dass der Kopfteil KO des Schraubelements SE an die Kontaktfläche KF2 auf der zweiten Seite S2 der Trägerplatte LP1 angepresst wird. Dazu wird das Schraubelement SE in einer Einfügerichtung R in das nicht metallisierte Durchgangsloch DL eingefügt. Das bedeutet, das Schraubelement SE wird z.B. während der Fertigung des elektrischen Geräts derart im nicht metallisierte Durchgangsloch DL angebracht, dass das Kontaktelement KE durch den Schaftteil SC des Schraubelements SE an der Trägerplatte LP1 fixiert und an die auf der ersten Seite S1 der Trägerplatte LP1 aufgebrachte Kontaktfläche KF1 angepresst wird. Weiterhin ist der Kopfteil KO des Schraubelements auf der zweiten Seite S2 der Trägerplatte LP1 an der dort angebrachten Kontaktfläche KF2 angepresst. Das Schraubelement SE stellt dadurch eine elektrisch leitende Verbindung zwischen dem Kontaktelement KE und der Kontaktfläche KF2 auf der zweiten Seite S2 der Trägerplatte LP1 her.

Der Kopfteil KO des Schraubelements SE und die Kontaktfläche KF2 auf der zweiten Seite S2 der Trägerplatte LP1 bilden dadurch einen Sensor bzw. eine Sensorfläche, wobei von Kontaktfläche KF2 auf der zweiten Seite S2 der Trägerplatte LP1 Signale - z.B. in Form von Spannungspotentialen, etc. - abgreifbar sind. Die auf der zweiten Seite S2 der Trägerplatte LP1 abgreifbaren Signale (z.B. Spannungspotential, etc.) können beispielsweise über eine Funktionsfähigkeit der elektrisch leitenden Verbindung zur weiteren Trägerplatte LP2 und damit über einen Montagezustand des Schraubelements SE (z.B. fehlendes Schraubelement SE, mangelhaft fixiertes bzw. montiertes Schraubelement, etc.) Aufschluss geben.

Für eine entsprechende Auswertung des abgegriffenen Signals kann beispielsweise eine Auswerteeinrichtung AW vorgesehen sein, an welche das Signal über einen Verbindung VB weitergeleitbar ist. Als Auswerteeinrichtung AW können z.B. bei einem Schaltnetzteil oder einer Stromversorgung eine bereits vorhandene Reglereinheit (z.B. Reglereinheit einer ersten Stufe bei einer mehrstufigen Stromversorgung) und/oder eine Messeinheit, wie z.B. eine Einrichtung zu Messung einer Eingangsspannung des elektrischen Geräts oder einer Ausgangsspannung des elektrischen Geräts, verwendet werden.

Figur 2 zeigt einen beispielhaften Ablauf des erfindungsgemäßen Verfahrens zum Überprüfen einer Schraubverbindung in einem elektrischen Gerät mit einer in Figur 1 beispielhaft dargestellten Anordnung.

Für die Durchführung des erfindungsgemäßen Verfahrens bzw. zum Überprüfen der Schraubverbindung wird während der Fertigung des elektrischen Geräts (z.B. Stromversorgung, etc.) in einem Fertigungsschritt 101 das Schraubelement SE in das nicht metallisiertes Durchgangsloch DL in der Trägerplatte LP1 in der Einfügerichtung R eingefügt. Über das Schraubelement SE wird einerseits das Kontaktelement KE, über welches zusätzlich zur Herstellung der mechanischen Verbindung der Trägerplatte LP1 mit der weiteren Trägerplatte LP2 auch Leistung und/oder elektrische Signale übertragen werden, an die elektrisch leitende Kontaktfläche KF1 an der ersten Seite S1 der Trägerplatte LP1 angepresst bzw. fixiert. Andererseits wird im Fertigungsschritt 101 das Schraubelement SE im nicht metallisierten Durchgangsloch DL derart angebracht, dass der Kopfteil KO des Schraubelements SE an die Kontaktfläche KF2 auf der zweiten Seite S2 der Trägerplatte LP1 anpresst wird und das Schraubelement SE damit eine leitende Verbindung zwischen der Kontaktfläche KF2 auf der zweiten Seite S2 der Trägerplatte LP1 und dem Kontaktelement KE herstellt. Der Kopfteil KO des Schraubelements SE bildet gemeinsam mit der Kontaktfläche KF2 auf der zweiten Seite S2 der Trägerplatte LP1 eine Sensorfläche.

In einem Prüfschritt 102, welcher z.B. bei einer Prüfung des elektrischen Geräts vor Auslieferung, bei einem Probebetrieb des elektrischen Geräts, bei einer Inbetriebnahme und/oder im Betrieb des elektrischen Geräts durchgeführt werden kann, wird von der Sensorfläche bzw. von der Kontaktfläche KF2 auf der zweiten Seite S2 der Trägerplatte LP1 ein Signal abgegriffen. Das abgegriffene Signal kann beispielsweise ein Spannungspotential sein.

In einem Auswerteschritt 103 wird das abgegriffene Signal ausgewertet, wobei durch das Signal eine Funktionsfähigkeit der elektrisch leitenden Verbindung zwischen der Trägerplatte LP1 und der weiteren Trägerplatte LP2 wiedergibt und dadurch aus dem Signal ein Montagezustand des Schraubelements bzw. einen ordnungsgemäße Ausführung der Schraubverbindung abgeleitet werden kann. Wird beispielsweise an der Sensorfläche bzw. an der Kontaktfläche KF2 der zweiten Seite S2 der Trägerplatte LP1 kein Signal bzw. kein Spannungspotential ermittelt, so kann z.B. ein Fehlen des Schraubelements SE erkannt werden. Wird z.B. ein schwankendes, sehr kleines oder zu großes Signal an der Sensorfläche abgegriffen, so kann daraus ebenfalls das Fehlen oder eine mangelhafte bzw. fehlerhafte Anbringung oder Fixierung des Schraubelements SE festgestellt werden. Die fehlerhafte Schraubverbindung bzw. eine mangelhaft ausgeführte Montage des Schraubelements SE kann damit sehr einfach erkannt und behoben werden, ohne dass das elektrische Gerät beschädigt wird oder es zu Sicherheitsrisken kommt.

Für die Auswertung kann das abgegriffene Signal beispielsweise über die Verbindung VB an die Auswerteeinheit AW weitergeleitet werden. Als Auswerteeinrichtung AW kann z.B. bei einem Schaltnetzteil oder einer Stromversorgung eine bereits vorhandene Reglereinheit und/oder Messeinheit genutzt werden, von welchen z.B. eine Eingangsspannung und/oder Ausgangsspannung des elektrischen Geräts bzw. der Stromversorgung ermittelt werden.

Die erfindungsgemäße Anordnung und das zugehörige Verfahren können zur Überprüfung von jeweiligen Schraubverbindungen in einem elektrischen Gerät genutzt werden, welche nicht nur für eine mechanische Verbindung, sondern auch für eine elektrisch leitende Verbindung zwischen Trägerplatten LP1, LP2 in einem elektrischen Gerät eingesetzt werden.

Bei einer speziellen Anwendungsvariante in einer elektrischen Stromversorgung werden z.B. zwei Schraubverbindungen entsprechend der erfindungsgemäßen Anordnung verwendet. Dabei wird beispielsweise von der Sensorfläche der ersten Schraubverbindung als Signal eine Eingangsspannung der Stromversorgung und von der Sensorfläche der zweiten Schraubverbindung als Signal eine Ausgangsspannung der Stromversorgung abgegriffen und ausgewertet. Ist beispielsweise eine der beiden Schraubverbindungen fehlerhaft (z.B. fehlendes Schraubelement SE), so wird je nach fehlendem oder mangelhaft montiertem Schraubelemente SE z.B. im Prüfschritt 102 bzw. im Auswerteschritt 103 z.B. von der Messeinheit keine Eingangsspannung gemessen bzw. es wird der Reglereinheit bei der Auswertung des Signals eine zu hohe Ausgangsspannung vorgetäuscht. Auf diese Weise wird sichergestellt, dass die Stromversorgung nicht hochfährt. Die fehlerhafte Schraubverbindung kann damit im Prüfschritt 102 bzw. im Auswerteschritt 103 erkannt und behoben werden und ein zufälliger bzw. unsicherer Kontakt zwischen dem Kontaktelement KE und der Kontaktfläche KF1 auf der ersten Seite S1 der Trägerplatte LP1 führt zu keiner Schädigung des elektrischen Geräts.

## Patentansprüche

1. Verfahren zum Überprüfen zumindest einer Schraubverbindung eines auf Trägerplatten (LP1, LP2) angeordneten, elektrischen Geräts, insbesondere einer Stromversorgung bzw. eines Schaltnetzteils, wobei durch die Schraubverbindung mittels eines leitenden Kontaktelements (KE) neben einer mechanischen Verbindung eine elektrisch leitende Verbindung zwischen einer Trägerplatte (LP1) des elektrischen Geräts und einer weiteren Trägerplatte (LP2) des elektrischen Geräts hergestellt wird, ***dadurch gekennzeichnet, dass*** ein Schraubelement (SE) in einem nicht metallisierten Durchgangsloch (DL) in der Trägerplatte (LP1) derart angebracht wird (101), dass das Kontaktelement (KE) für die elektrisch leitende Verbindung zwischen der Trägerplatte (LP1) mit der weiteren Trägerplatte (LP2) an eine Kontaktfläche (KF1) auf einer ersten Seite (S1) der Trägerplatte (LP2) angepresst wird und dass ein Kopfteil (KO) des Schraubelements (SE) an eine leitende Kontaktfläche (KF2) auf einer zweiten Seite (S2) der Trägerplatte (LP1) angepresst wird, dass an der leitenden Kontaktfläche (KF2) auf der zweiten Seite (S2) der Trägerplatte (LP2) ein Signal abgegriffen wird (102) und dass das abgegriffene Signal ausgewertet wird (103), wobei aus dem Signal ein Montagezustand des Schraubelements (SE) abgeleitet wird.

2. Verfahren nach Anspruch 1, ***dadurch gekennzeichnet, dass*** das an der leitenden Kontaktfläche (KF2) auf der zweiten Seite (S2) der Trägerplatte (LP2) abgegriffene Signal an ein Auswerteeinrichtung (AW) weitergeleitet wird (103).

3. Verfahren nach Anspruch, ***dadurch gekennzeichnet, dass*** als Auswerteeinrichtung (AW) eine Reglereinheit und/oder Messeinheit des elektrischen Gerätes verwendet wird (103).

4. Verfahren nach der vorangegangenen Ansprüche, ***dadurch gekennzeichnet, dass*** als Signal an der leitenden Kontaktfläche (KF2) auf der zweiten Seite (S2) der Trägerplatte (LP2) ein Spannungspotential abgegriffen wird (102).

5. Verfahren nach einem der vorangegangenen Ansprüche, ***dadurch gekennzeichnet, dass*** das Signal während eines Probebetriebs, bei einer Inbetriebnahme und/oder in einem laufenden Betrieb des elektrischen Geräts abgegriffen (102) und ausgewertet wird (103).

6. Anordnung zum Überprüfen zumindest einer Schraubverbindung eines auf Trägerplatten (LP1, LP2) angeordneten, elektrischen Geräts, insbesondere einer Stromversorgung bzw. eines Schaltnetzteils, zur Durchführung eines Verfahrens nach den Ansprüchen 1 bis 5, zumindest aufweisend:
- eine Trägerplatte (LP1), welche zumindest ein nicht metallisiertes Durchgangsloch (DL) und zumindest im Bereich des Durchgangslochs (DL) auf einer ersten Seite (S1) und auf einer zweite Seite (S2) leitende Kontaktflächen (KF1, KF2) aufweist;
- ein leitendes Kontaktelement (KE), welches neben einer mechanischen Verbindung eine elektrisch leitende Verbindung zwischen der Trägerplatte (LP1) und einer weiteren Trägerplatte (LP2) herstellt;
- ein Schraubelement (SE), welches derart im nicht metallisierten Durchgangsloch (DL) angeordnet ist, dass das Kontaktelement (KE) für die elektrisch leitende Verbindung zur weiteren Trägerplatte (LP2) an eine Kontaktfläche (KF1) auf einer ersten Seite (S1) der Trägerplatte (LP2) angepresst wird und dass ein Kopfteil (KO) des Schraubelements (SE) an eine leitende Kontaktfläche (KF2) auf einer zweiten Seite (S2) der Trägerplatte (LP1) angepresst wird, wobei von der leitenden Kontaktfläche (KF2) auf der zweiten Seite (S2) der Trägerplatte (LP1) ein Signal abgreifbar ist, aus welchem ein Montagezustand des Schraubelements (SE) abgeleitet werden kann.

7. Anordnung nach Anspruch 6, ***dadurch gekennzeichnet, dass*** weiterhin eine Auswerteeinheit (AW) zum Auswerten des an der leitenden Kontaktfläche (KF2) auf der zweiten Seite (S2) der Trägerplatte (LP1) abgegriffenen Signals vorgesehen ist.

8. Anordnung nach einem der Ansprüche 6 bis 7, ***dadurch gekennzeichnet, dass*** das Kontaktelement (KE) und das Schraubelement (SE) aus leitendem Material hergestellt sind.

9. Anordnung nach einem der Ansprüche 6 bis 8, ***dadurch gekennzeichnet, dass*** das Kontaktelement (KE) ein U-förmiges Profil oder eine Bügelform aufweist.
